(19) Europäisches Patentamt
European Patent Office
Office européen des brevets

(11) **EP 4 302 180 B1**

(12) **EUROPEAN PATENT SPECIFICATION**

(45) Date of publication and mention
of the grant of the patent:
**17.09.2025 Bulletin 2025/38**

(21) Application number: **21716309.6**

(22) Date of filing: **29.03.2021**

(51) International Patent Classification (IPC):
*G06F 8/41* *(2018.01)*

(52) Cooperative Patent Classification (CPC):
**G06F 8/443; G06F 8/456**

(86) International application number:
**PCT/EP2021/058116**

(87) International publication number:
**WO 2022/207064 (06.10.2022 Gazette 2022/40)**

(54) **DATA PROCESSING APPARATUS AND METHOD FOR PROVIDING A COMPILER WITH A POLYHEDRAL SCHEDULER**

DATENVERARBEITUNGSVORRICHTUNG UND VERFAHREN ZUR BEREITSTELLUNG EINES COMPILERS MIT EINEM POLYEDRISCHEN SCHEDULER

APPAREIL DE TRAITEMENT DE DONNÉES ET PROCÉDÉ POUR FOURNIR UN COMPILATEUR AVEC UN ORDONNANCEUR POLYÉDRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2024 Bulletin 2024/02**

(73) Proprietor: **Huawei Technologies Co., Ltd.**
**Shenzhen, Guangdong 518129 (CN)**

(72) Inventors:
• **ZHANG, Zhen**
**80992 Munich (DE)**
• **BASTOUL, Cedric**
**80992 Munich (DE)**

(74) Representative: **Gill Jennings & Every LLP**
**The Broadgate Tower**
**20 Primrose Street**
**London EC2A 2ES (GB)**

(56) References cited:
• BASTOUL CEDRIC ET AL: "Optimizing GPU deep learning operators with polyhedral scheduling constraint injection", THE INTERNATIONAL SYMPOSIUM ON MEMORY SYSTEMS, ACMPUB27, NEW YORK, NY, USA, 2 April 2022 (2022-04-02), pages 313 - 324, XP058848927, ISBN: 978-1-4503-9709-4, DOI: 10.1109/ CGO53902.2022.9741260
• RIYADH BAGHDADI ET AL: "Tiramisu: a polyhedral compiler for expressing fast and portable code", CODE GENERATION AND OPTIMIZATION, IEEE PRESS, 445 HOES LANE, PO BOX 1331, PISCATAWAY, NJ08855-1331USA, 16 February 2019 (2019-02-16), pages 193 - 205, XP058427634, ISBN: 978-1-7281-1436-1
• NICOLAS VASILACHE ET AL: "Tensor Comprehensions: Framework-Agnostic High-Performance Machine Learning Abstractions", ARXIV.ORG, CORNELL UNIVERSITY LIBRARY, 201 OLIN LIBRARY CORNELL UNIVERSITY ITHACA, NY 14853, 13 February 2018 (2018-02-13), pages 1 - 36, XP081223016

- SCHMITT MAXIME ET AL: "Adaptive Code Refinement: A Compiler Technique and Extensions to Generate Self-Tuning Applications", 2017 IEEE 24TH INTERNATIONAL CONFERENCE ON HIGH PERFORMANCE COMPUTING (HIPC), IEEE, 18 December 2017 (2017-12-18), pages 172 - 181, XP033317662, DOI: 10.1109/HIPC.2017.00028
- CHELINI LORENZO L CHELINI@TUE NL ET AL: "Automatic Generation of Multi-Objective Polyhedral Compiler Transformations", EXTENDED ABSTRACTS OF THE 2021 CHI CONFERENCE ON HUMAN FACTORS IN COMPUTING SYSTEMS, ACMPUB27, NEW YORK, NY, USA, 30 September 2020 (2020-09-30), pages 83 - 96, XP058642514, ISBN: 978-1-4503-8295-3, DOI: 10.1145/3410463.3414635

# EP 4 302 180 B1

**Description**

## TECHNICAL FIELD

The present disclosure relates to data processing. More specifically, the present disclosure relates to a data processing apparatus and method implementing a polyhedral scheduler for a compiler.

## BACKGROUND

Deep Learning (DL) is developing extremely fast, supported by the availability of big data, large processing power and convenient high-level abstractions. For efficiently developing and optimizing DL algorithms, compilers should support fast high-level prototyping and efficient low-level parallel code generation. In a compiler, scheduling is responsible for a variety of critical optimization actions and decisions, i.e. dealing with scheduling constraints which may conflict with each other, such as parallelism extraction (i.e. locating parallel blocks and loops, including external parallel loops and/or internal parallel loops), permutability extraction (i.e. locating loops that can be partitioned into smaller chunks, i.e. "tiling" transformation), fusion and/or fission (i.e. combining computations together or not), data locality optimization (i.e. performing computations that reuse the same data closer to each other), and enforcing specific data access patterns. Depending on the input problem and target architecture, often some scheduling constraints may be more critical than others.

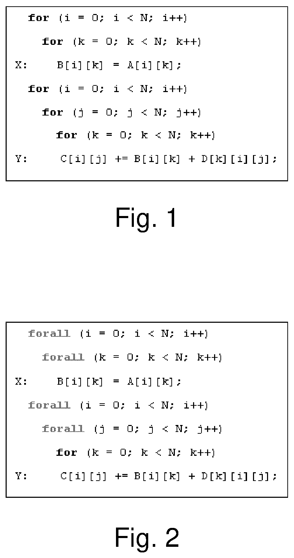

Polyhedral schedulers were developed to address linear algebra and scientific computing kernels for multicore CPU architectures more than a decade ago. With the recent emergence of artificial intelligence and machine learning frameworks, we are facing a multiplication of situations with a growing number of operators to be executed on various target architectures. "One-size-fits-all" scheduling algorithms are failing at finding the best optimization for every cases. For instance, conventional automatic schedulers may not optimize DL operators, i.e. software functions or modules in the best way for the desired target architecture. Figure 1 shows a computational kernel that is a simplified version of a real-life fused operator we will use as a running example throughout this document. A conventional polyhedral scheduler may process the computation kernel shown in figure 1, i.e. analyze, parallelize and optimize it to the final version shown in figure 2. Although the conventional polyhedral scheduler is capable of successfully extracting parallel loops denoted by the "forall" keywords, the final code illustrated in figure 2 is far from optimal, in particular with respect to DL optimizations. This is because, the final code illustrated in figure 2, firstly, is not a perfectly nested loop and, secondly, the access to the main tensor D[k][i][j] is inefficient due to long jumps in the memory space at every iteration of the innermost loop.

RIYADH BAGHDADI ET AL, "Tiramisu: a polyhedral compiler for expressing fast and portable code", CODE GENERATION AND OPTIMIZATION, IEEE PRESS, 445 HOES LANE, PO BOX 1331, PISCATAWAY, NJ08855-1331USA, (20190216), ISBN 978-1-7281-1436-1, pages 193 - 205, discloses Tiramisu, a polyhedral framework designed to generate high performance code for multiple platforms including multicores, GPUIs and distributed machines.

NICOLAS VASILACHE ET AL, "Tensor Comprehensions: Framework-Agnostic High-Performance Machine Learning Abstractions", ARXIV.ORG, CORNELL UNIVERSITY LIBRARY, 201 OLIN LIBRARY CORNELL UNIVERSITY ITHACA, NY 14853, (20180213), pages 1 - 36, discloses a polyhedral framework to construct a domain-specific optimizer effective on deep learning models on GPUs.

CHELINI LORENZO L CHELINI@TUE NL ET AL, "Automatic Generation of Multi-Objective Polyhedral Compiler Transformations", EXTENDED ABSTRACTS OF THE 2021 CHI CONFERENCE ON HUMAN FACTORS IN COMPUTING SYSTEMS, ACMPUB27, NEW YORK, NY, USA, (20200930), doi:10.1145/3410463.3414635, ISBN 978-1-4503-8295-3, pages 83 - 96, discloses an adaptive and automatic scheduler that permits generation of novel loop transformation sequences (or recipes) capable of delivering strong performance for a variety of different architectures without relying on auto-tuning, nor on pre-determined transformation strategies.

SCHMITT MAXIME ET AL, "Adaptive Code Refinement: A Compiler Technique and Extensions to Generate Self-Tuning Applications", 2017 IEEE 24TH INTERNATIONAL CONFERENCE ON HIGH PERFORMANCE COMPUTING (HIPC), IEEE, (20171218), doi:10.1109/HIPC.2017.00028, pages 172 - 181, discloses a technique for providing adaptive capabilities to compute-intensive codes automatically.

## SUMMARY

It is an objective of the present disclosure to provide a data processing apparatus and method for implementing a more flexible and efficient polyhedral scheduler for a compiler.

The foregoing and other objectives are achieved by the subject matter of the independent claims. Further implementation forms are apparent from the dependent claims, the description and the figures.

Details of one or more embodiments are set forth in the accompanying drawings and the description below. Other features, objects, and advantages will be apparent from the description, drawings, and claims.

BRIEF DESCRIPTION OF THE DRAWINGS

In the following, embodiments of the present disclosure are described in more detail with reference to the attached figures and drawings, in which:

Figs. 1 and 2 show an exemplary input code and an exemplary output code provided by a polyhedral scheduler;

Fig. 3a is a schematic diagram illustrating a compilation processing flow based on a polyhedral scheduler;

Fig. 3b is a schematic diagram illustrating a data processing apparatus according to an embodiment and a compilation processing flow based on a polyhedral scheduler implemented by the data processing apparatus according to an embodiment;

Fig. 4 is a schematic diagram illustrating in more detail elements of a data processing apparatus according to an embodiment;

Fig. 5 is a schematic diagram illustrating in more detail a constraints dispatcher of a data processing apparatus according to an embodiment;

Fig. 6 is a schematic diagram illustrating in more detail a data dependence analysis entity of a data processing apparatus according to an embodiment;

Fig. 7 is a schematic diagram illustrating in more detail a scheduling entity implementing a scheduling algorithm of a data processing apparatus according to an embodiment;

Fig. 8 shows an exemplary output code provided by a polyhedral scheduler implemented by a data processing apparatus according to an embodiment; and

Fig. 9 is a flow diagram illustrating a data processing method according to an embodiment.

In the following identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

As will be described in more detail below, embodiments disclosed herein implement a polyhedral scheduler for processing an input code or a portion thereof, i.e. computational kernel into an output code. As will be appreciated, polyhedral schedulers are using linear algebra to model and to compute an ordering for all iterations of a computational kernel. This ordering is expressed, for each statement, in the form of a multidimensional affine function which associates iterations of the statement to a logical date. As will be further appreciated, the three main abstractions manipulated by polyhedral schedulers and their notations are: (1) iteration domains which represent executions of statements, (2) affine access relations which encode the accesses to data, and (3) affine scheduling functions which encode the ordering.

The application domain of polyhedral schedulers is loop-based programs where the bounds of the loops and the conditions of the tests are affine constraints on the loop iterators and the global parameters that are not known but have a fixed value during the execution of the computational kernel. Under this assumption, a particular execution of a statement can be totally determined by the value of the surrounding loop iterators, called the "iteration vector". All the executions of a statement of a computational kernel may be represented with the set of all possible iteration vectors.

In the example shown in figure 1 the computational kernel has two statements X and Y. Statement X is enclosed inside two loops: loop i bounded by constraints i >= 0 and i < N and loop k bounded by constraints k >= 0 and k < N. In this code, N is a parameter. Any execution of the statement X is determined by the iteration vector (i, k). All the executions of X can be modeled by the set of all possible iteration vectors. This may be expressed in the following way:

$$[N] \rightarrow \{X(i,k) : 0 \leq i < N \text{ and } 0 \leq k < N\}$$

The left side shows the parameter N while the right side presents the set of iteration vectors (i,k) of statement X, bounded by affine constraints $0 \leq i < N$ and $0 \leq k < N$. Equivalently statement Y may be expressed as follows:

$$[N] \rightarrow \{Y(i,j,k) : 0 \leq i < N \text{ and } 0 \leq j < N \text{ and } 0 \leq k < N\}$$

Combining the above expressions all the iteration domains of the computational kernel shown in figure 1 may be expressed in the following way:

$$[N] \rightarrow \{X(i,k) : 0 \leq i < N \text{ and } 0 \leq k < N; Y(i,j,k) : 0 \leq i < N \text{ and } 0 \leq j < N \text{ and } 0 \leq k < N\}$$

Affine access relations aim at specifying the accesses of data within the computational kernel. To model accesses, polyhedral schedulers use multidimensional affine relations which map every iteration of iteration domains to memory space locations of multidimensional arrays. In the example shown in Figure 1, the statement Y whose executions are determined by the iteration vector (i,j,k) makes an access to array D using reference D[k][i][j]. This may be expressed in the following way:

$$[N] \rightarrow \{D\_Y(i,j,k) = (k,i,j)\},$$

where (i,j,k) corresponds to the iteration vector and (k,i,j) corresponds to the mapping for each dimension of array D. Here each dimension mapping is an affine function of the iterators and the parameter, the first is equal to k, the second to i, and the third to j. All accesses to data in the example can be modeled in the following way:

$$[N] \rightarrow \{B\_X(i,k) = (i,k); A\_X(i,k) = (i,k); C\_Y(i,j,k) = (i,j); B\_Y(i,j,k) = (i,k); D\_Y(i,j,k) = (k,i,j)\}.$$

Affine scheduling functions aim at specifying the relative ordering of all iterations of all iteration domains (iteration domains do not encode ordering, they are only sets in the mathematical sense). To model such ordering, polyhedral schedulers use multidimensional affine functions that associate every iteration of iteration domains to a logical date. Each dimension of the function is an affine expression of the iteration vector dimensions and the parameters. Logical dates are multidimensional: they encode a date with several components in a lexicographic way (like days, hours, minutes, seconds, etc.). Such affine scheduling functions are expressive enough to model arbitrary sequences of all classical loop transformations (loop fusion, fission, reversal, interchange, skewing, strip-mining, tiling, shifting, etc.).

For instance, the following scheduling functions encode exactly the order of the iterations of the exemplary computational kernel shown in figure 1:

$$[N] \rightarrow \{X(i,k) = (0,i,k,0); Y(i,j,k) = (1,i,j,k)\}$$

For this example, there is one scheduling function for each statement (both are 4-dimensional and map iterations to the same time space). For instance, it is specified that iteration i = 2 and k = 1 noted (2,1) of statement X is executed at logical date X(2,1) = (0,2,1,0), i.e. at "day 0, hour 2, minute 1, second 0", or that the iteration i = 2, j = 0, k = 1 noted (2,0,1) of statement Y is executed at logical date Y(2,0,1) = (1,2,0,1), i.e. at "day 1, hour 2, minute 0, second 1". Hence iteration (2,1) of X is executed before iteration (2,0,1) of Y. It may be noted that all iterations of X are executed at "day 0" while all iterations of Y are executed at "day 1", which models the separation of the two external loops in the computational kernel. The second dimension of X corresponds to the expression i (specifying that lower values of i are executed before higher values of i) which corresponds to the first loop, and the same reasoning applies to all other scheduling dimensions. Finally, it may be checked that the scheduling functions model a total order for all iterations and that it corresponds to the iteration order in the example computational kernel.

There is no limit to the number of scheduling dimensions, but the expression for each dimension can only be an affine expression of the iteration vector dimensions and the parameters (because there exist algorithms to generate the code that implements an ordering modelled in this way). Hence the general form of scheduling functions for the example shown in figure 1 and as used by embodiments disclosed herein is:

$$
\begin{aligned}
[N] \to \{ & \\
X(i,k) = & (t\_X\_0\_i * i + t\_X\_0\_k * k + t\_X\_0\_N * N + t\_X\_0\_1 * 1, \\
& t\_X\_1\_i * i + t\_X\_1\_k * k + t\_X\_1\_N * N + t\_X\_1\_1 * 1, \\
& \ldots \\
& t\_X\_n\_i * i + t\_X\_n\_k * k + t\_X\_n\_N * N + t\_X\_n\_1 * 1); \\
\\
Y(i,j,k) = & (t\_Y\_0\_i * i + t\_Y\_0\_j * j + t\_Y\_0\_k * k + t\_Y\_0\_N * N + t\_Y\_0\_1 * 1, \\
& t\_Y\_1\_i * i + t\_Y\_1\_j * j + t\_Y\_1\_k * k + t\_Y\_1\_N * N + t\_Y\_1\_1 * 1, \\
& \ldots \\
& t\_Y\_n\_i * i + t\_Y\_n\_j * j + t\_Y\_n\_k * k + t\_Y\_n\_N * N + t\_Y\_n\_1 * 1) \\
\} &
\end{aligned}
$$

The role of the polyhedral scheduler is to compute scheduling functions, which corresponds to finding the various scheduling coefficients in the expression above (all the t_* coefficients such as t_X_0_i denoting the scheduling coefficient multiplying i at dimension 0 for statement X).

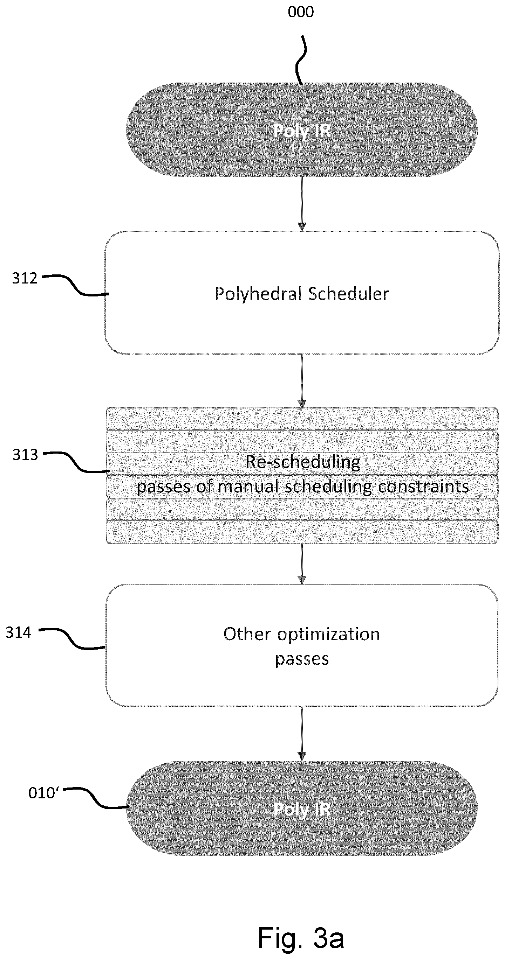

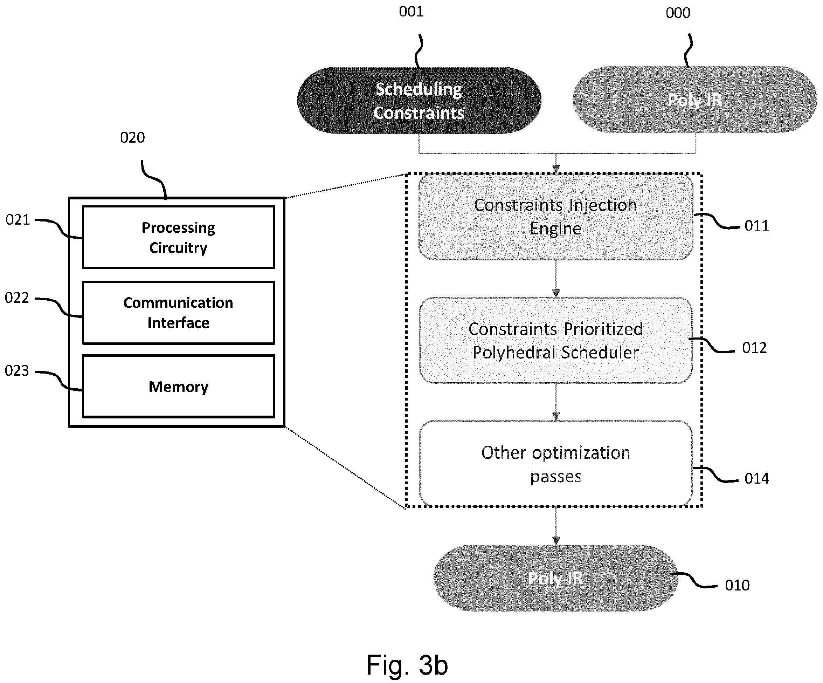

Figure 3a is a schematic diagram illustrating a compilation processing flow based on a polyhedral scheduler, while figure 3b is a schematic diagram illustrating a data processing apparatus 020 according to an embodiment and a compilation processing flow based on a polyhedral scheduler 012 implemented by the data processing apparatus 020.

In the conventional compilation processing flow illustrated in figure 3a, a conventional polyhedral scheduler 312 processes an input polyhedral intermediate representation 000. This may be followed by generally time consuming and complex re-scheduling passes of manual scheduling constraints 313 and other optimization passes 314 to produce the output polyhedral intermediate representation 010'.

In contrast therewith, the data processing apparatus 020 illustrated in figure 3b enables a fine control over polyhedral scheduling with injection of scheduling constraints 001 with user-specified priorities. These constraints may impact different aspects of the scheduling computation process to influence the computation towards the best scheduling, which may comprise one or more other optimization passes 014. As illustrated in figure 3b, the data processing apparatus 020 may comprise a processing circuitry 021, a communication and/or user interface 022 and a memory 023. The processing circuitry 021 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or generalpurpose processors. The memory 023 may be configured to store executable program code which, when executed by the processing circuitry 021, causes the data processing apparatus 020 to perform the functions and operations described herein.

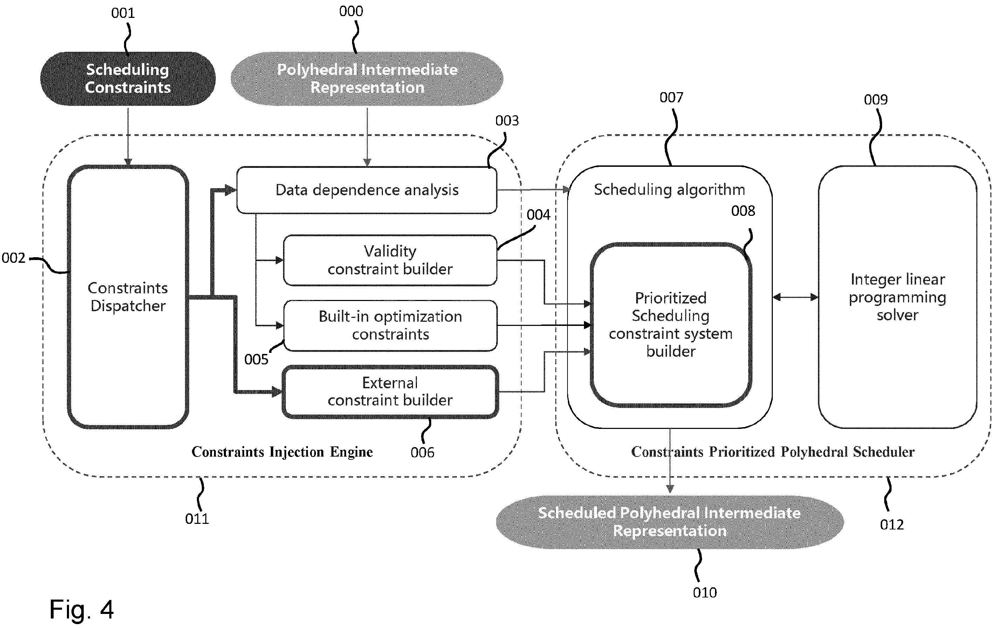

As will be described in more detail under further reference to figure 4, the processing circuitry 021 of the data processing apparatus 020 is configured to implement a scheduling constraints injection entity (herein also referred to as scheduling constraints injection engine) 011 configured to, based on one or more scheduling constraints 001, adapt a polyhedral intermediate representation 000 of an input code, i.e. source code for obtaining an adapted polyhedral intermediate representation of the input code. Moreover, the processing circuitry 021 of the data processing apparatus 020 is configured to implement a constraints prioritized polyhedral scheduler 012 configured to generate, based on the adapted polyhedral intermediate representation of the input code, a scheduled polyhedral intermediate representation of the input code 010. The scheduling constraints injection entity 011 is further configured to adjust, based on the one or more scheduling constraints, the constraints prioritized polyhedral scheduler 012.

In the embodiment shown in figure 4, the scheduling constraints injection entity 011 is configured to further adjust the constraints prioritized polyhedral scheduler 012 based on the polyhedral intermediate representation of the input code. In other words, in the embodiment shown in figure 4, the scheduling constraints injection entity 011 is configured to adjust the constraints prioritized polyhedral scheduler based on both the one or more scheduling constraints and the polyhedral intermediate representation of the input code, as will be described in more detail in the following.

In figure 4 the following elements are shown, which will be described in more detail further below:

000: The polyhedral intermediate representation, which is the input of the data processing apparatus 020.

001: The scheduling constraints, which may be provided via a user interface of the data processing apparatus 020. This allows injecting the domain-specific scheduling constraints 001 into the data processing apparatus 020. In an embodiment, the scheduling constraints 001 may be formatted as text files, binary files or encoded files.

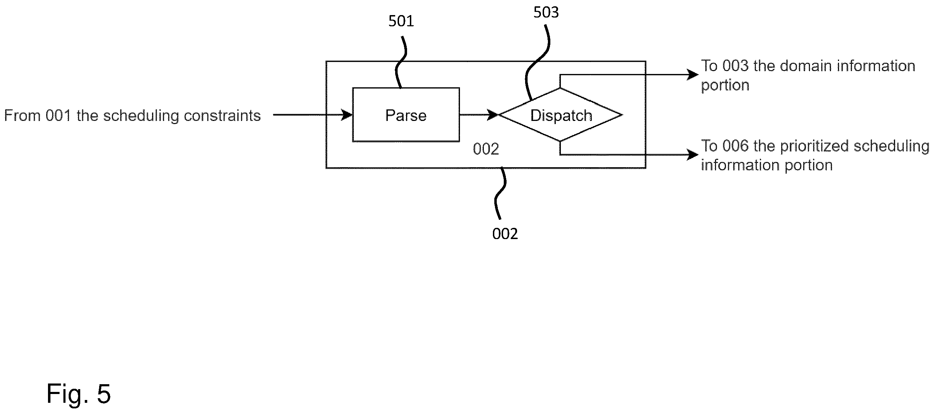

002: A constraints dispatcher, which parses the input scheduling constraints 001 into domain constraints and the scheduling constraints, as will be described in more detail below in the context of figure 5.

003: A data dependency analysis entity, which allows to build the data-dependency analysis with the domain constraints.

004: A validity constraint builder configured to generate the constraints necessary to assert the semantical correctness of the scheduling, i.e., to maintain the logical behavior specified by the input polyhedral intermediate representation 000..

005: A built-in optimization constraints entity configured to generate the basic polyhedral optimization constraints.

006: An external constraint builder configured to generate the external constraints as an affine model. 007: A scheduling entity implementing a scheduling algorithm based on a prioritized scheduling constraint system builder 008.

009: An integer linear programming (ILP) solver configured to solve the ILP problem with the constraints and the optimization function.

010: The scheduled polyhedral intermediate representation, which may be the output of the data processing apparatus 020.

Embodiments disclosed here allow controlling the constraints prioritized polyhedral scheduler 012 by injecting appropriate constraints 001. While conventional polyhedral schedulers may focus on extracting parallelism and improving data locality, embodiments disclosed herein may add new objectives and/or prioritized objectives, e.g., without loss of generality, allow adapting the polyhedral scheduler 012 to generate (1) perfectly nested loops (single loop with all statements in the innermost loop) and (2) efficient data access patterns (avoiding long jumps in memory). Those two properties are highly desirable when targeting hardware accelerators such as GPUs and other types of chips.

In the following embodiments of the data processing apparatus 020 will be described in more detail on the basis of the exemplary input code, i.e. computational kernel shown in figure 1, namely:

```
for (i = 0; i < N; i++)
  for (k = 0; k < N; k++)
X:    B[i][k] = A[i][k];
  for (i = 0; i < N; i++)
    for (j = 0; j < N; j++)
      for (k = 0; k < N; k++)
Y:      C[i][j] += B[i][k] + D[k][i][j];
```

As already described above, a conventional polyhedral scheduler is able to compute scheduling X(i,k) = (0, i, k) with parallel dimensions 1 and 2, and Y(i, j, k) = (1, i, j, k) with parallel dimensions 1 and 2. This polyhedral scheduling corresponds to the target code shown in figure 2, namely:

```
forall (i = 0; i < N; i++)
  forall (k = 0; k < N; k++)
X:    B[i][k] = A[i][k];
  forall (i = 0; i < N; i++)
    forall (j = 0; j < N; j++)
      for (k = 0; k < N; k++)
Y:      C[i][j] += B[i][k] + D[k][i][j];
```

As already described above, although parallelism denoted by "forall" loops has been successfully extracted by the conventional polyhedral scheduler, the final code has two issues: (1) two loop nests have been generated and (2) the access to D[k][i][j] is inefficient because every iteration of the innermost loop achieves a long "jump" in the memory space.

As will be described in the following, both of these issues may be addressed by the data processing apparatus 020 according to an embodiment based on the injection of suitable scheduling constraints.

As already described above, the input of the data processing apparatus 020 comprises two sets of information, namely the polyhedral intermediate representation 000 of the code and the scheduling constraints 001.

In an embodiment, the polyhedral intermediate representation 000 may include (1) iteration domain information, (2) data access information and (3) ordering information in the form of affine sets and functions. For instance, for the exemplary input code shown in figure 1, the polyhedral intermediate representation 000 may include the following information:

Iteration domains (which model statement executions):

$$[N] \rightarrow \{X(i,k) : 0 \geq i<N \text{ and } 0 \geq k<N; Y(i,j,k) : 0 \geq i<N \text{ and } 0 \geq j<N \text{ and } 0 \geq k<N\}$$

Access functions which model accesses to data):

$$[N] \rightarrow \{B\_X(i,k) = (i,k);$$

$$A\_X(i,k) = (i,k);$$

$$C\_Y(i,j,k) = (i,j);$$

$$B\_Y(i,j,k) = (i,k);$$

$$D\_Y(i,j,k) = (k,i,j)\}$$

Order functions (which model original ordering of statement iteration executions):

$$[N] \rightarrow \{X(i,k) = (0,i,k); Y(i,j,k) = (1,i,j,k)\}$$

The scheduling constraints 001 may be provided a specific text format or an API. For instance, for the exemplary input code shown in figure 1 the scheduling constraints 001 may be represented in the following way.

```
# Scheduling constraints
# - Domain
[N] -> {X(i,j,k) : 0≥i<N and 0≥j<N and 0≥k<N}
# - Schedule
[N] -> {X(i,j,k) = (!j+?1, !j+?2, j+?3); Y(i,j,k) = (!j+?1, !j+?2, j+?3)}
```

In an embodiment, the semantics of the above scheduling constraints may be as follows.

Domain: the domain part specifies the iteration domain constraints for the statement X: it aims at replacing the iteration domain constraints specified in the input polyhedral representation 000.

Schedule: the schedule part specifies constraints to be considered by the scheduling algorithm 007. For the example above, they specify that (1) the two statements are scheduled in the same way for their first three dimensions (expressed by similar scheduling for both statements), (2) the first and second dimensions must *not* be scheduled according to j (expressed by the "!j" sub-expression) without other constraints (expressed by the "+?1" or "+?2" sub-expressions: adding a question mark specifies that the remaining part of the affine expression is free, however a numbered question mark may constrain those free coefficients to be equal amongst various expressions), and (3) the third dimension *has* to be scheduled according to j (expressed by the "j" sub-expression) without other constraint (specified by the "+?3" sub-expression).

In an embodiment, the constraints prioritized polyhedral scheduler 012 of the data processing apparatus 020 is configured to compute the coefficients of the affine scheduling for each statement, and metainformation about all affine scheduling dimensions such as whether the dimension is parallel or not. For the example described above, the form of the affine scheduling (determined by the polyhedral scheduler 012) may be as follows:

```
[N] -> {
TX(i,k)  = (t_X_0_i * i + t_X_0_k * k + t_X_0_N * N + t_X_0_1 * 1,
            t_X_1_i * i + t_X_1_k * k + t_X_1_N * N + t_X_1_1 * 1,
            t_X_2_i * i + t_X_2_k * k + t_X_2_N * N + t_X_2_1 * 1);


TY(i,j,k) = (t_Y_0_i * i + t_Y_0_j * j + t_Y_0_k * k + t_Y_0_N * N + t_Y_0_1 * 1,
             t_Y_1_i * i + t_Y_1_j * j + t_Y_1_k * k + t_Y_1_N * N + t_Y_1_1 * 1,
             t_Y_2_i * i + t_Y_2_j * j + t_Y_2_k * k + t_Y_2_N * N + t_Y_2_1 * 1)
}
```

Thus, as will be appreciated, in an embodiment, the constraints prioritized polyhedral scheduler 012 is configured to determine and output an optimal value for each t_* coefficient.

Some of the aspects described above will be explained in more detail in the following under further reference to figures 5, 6 and 7.

As illustrated in figure 5 and as already described above, in an embodiment, the constraints dispatcher 002 may receive the scheduling constraints 001 to be injected in the form of either a specific file format or API calls. The constraints dispatcher 002 is further configured to raise these scheduling constraints 001 to internal data structures (processing block 501) and to separate them depending on their type (processing block 503). This separation allows submitting the scheduling constraints 001 depending on their type either to the data dependence analysis unit 003 (namely, as illustrated in figure 5, the domain information portion) or to the polyhedral scheduling algorithm 007 after being processed by the external constraint builder 006 (namely, as illustrated in figure 5, the prioritized scheduling information portion), as will be described in more detail below.

For the example already described above, the constraints dispatcher 002 is configured to process and send the "domain" constraints "[N] -> {X(i,j,k) : 0≥i<N and 0≥j<N and 0≥k<N}" to the data dependence analysis unit 003, while the schedule portion "[N] -> {X(i,j,k) = (!j+?1, !j+?2, j+?3); Y(i,j,k) = (!j+?1, !j+?2, j+?3)}" is sent to the external constraint builder 006.

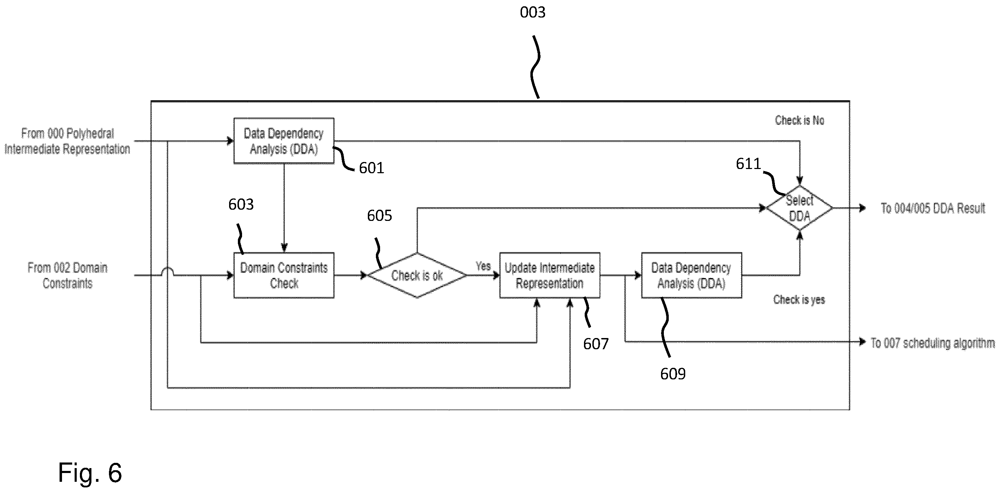

As illustrated in figure 6, in an embodiment, the data dependence analysis entity 003 receives the polyhedral representation 000 of the input code and additional constraints from the constraints dispatcher 002. The data dependence analysis (DDA) entity 003 is configured to find iterations with a data dependence relation within the polyhedral representation 000 of the input code and to express these iterations by means of affine sets. The additional constraints are used for altering the input polyhedral intermediate representation 000. In an embodiment, the data dependence analysis entity 003 may perform a normal Data Dependence Analysis 601 to check whether the alteration does not modify the semantics of the input problem with a Domain Constraint Check 603. If the check is successful 605, the alteration can be made by the Update Intermediate Representation entity 607 and the Data Dependence Analysis is achieved again including alterations 609. Depending on the Check entity 605, the output of the initial Data Dependence Analysis 601 or the output of the Data Dependence Analysis after updating the intermediate representation 609 is selected as output by the Select entity 611.

For the example describe above, the additional constraints expand the iteration domain of the statement X. The data dependence analysis entity 003 asserts the correctness and applies the alteration. The output is the following altered set of iterations in dependence relation which is provided to the validity constraint builder 004 and the built-in optimization constraints entity 005:

```
D_XY = [N] -> {(ix,jx,kx,iy,jy,ky)   | 0 <= ix <= N && 0 <= jx <= N && 0 <= kx <= N &&
                 0 <= iy <= N && 0 <= jy <= N && 0 <= ky <= N &&
                 ix == iy && kx == ky}


D_YsYt = [N] -> {(is,js,ks,it,jt,kt) | 0 <= is <= N && 0 <= js <= N && 0 <= ks <= N &&
                 0 <= it <= N && 0 <= jt <= N && 0 <= kt <= N &&
                 is == it && js == jt && kt > ks}
```

In an embodiment, the validity constraint builder 004 is configured to translate the input data dependence affine sets into constraints on scheduling coefficients which must be respected at any time for the final code to be semantically equivalent to the input code. To this end, in an embodiment, the validity constraint builder 004 may implement the translation mechanism disclosed in Feautrier, P. Some efficient solutions to the affine scheduling problem. I. One-dimensional time. Int J Parallel Prog 21, 313-347 (1992). This translation mechanism encodes the fact that the relative order of iterations in dependence relation must be respected in the final code:

- Y(i,j,k) - X(i,j,k) > 0 for all iterations in D_XY (translated to affine constraints on scheduling coefficients with Feautrier translation mechanism),
- Yt(i,j,k) - Ys(i,j,k) > 0 for all iterations in D_YsYt (translated to affine constraints on scheduling coefficients with Feautrier translation mechanism).

In an embodiment, the built-in optimization constraints entity 005 is configured to translate input data dependence affine sets into affine constraints and one or more cost functions which should be minimized for the final code to be optimized. To this end, in an embodiment, the built-in optimization constraints entity 005 may implement the translation mechanism disclosed in Uday Bondhugula, Albert Hartono, J. Ramanujam, P. Sadayappan A practical automatic polyhedral parallelizer and locality optimizer PLDI '08: Proceedings of the 29th ACM SIGPLAN Conference on Programming Language Design and Implementation June 2008 Pages 101-113. This translation mechanism encodes the optimization of outer parallelism and data locality:

- uXY*N + wXY - (Y(i,j,k) - X(i,j,k)) > 0 for all iterations in D_XY (translated to affine constraints on scheduling coefficients with Feautrier translation mechanism),
- uYY*N + wYY - (Yt(i,j,k) - Ys(i,j,k)) > 0 for all iterations in D_YsYt (translated to affine constraints on scheduling coefficients with Feautrier translation mechanism),
- minimize (uXY,uYY,wXY,wYY).

In an embodiment, the external constraint builder 006 is configured to translate constraints received from the constraint dispatcher 002 into affine constraints on scheduling coefficients. In the example described above the encoding may be as follows:

$$t\_X\_0\_j = 0 \ \&\&$$

$$t\_Y\_0\_j = 0 \ \&\&$$

$$t\_X\_0\_i = t\_Y\_0\_i \ \&\& \ t\_X\_0\_k = t\_Y\_0\_k \ \&\& \ t\_X\_0\_N = t\_Y\_0\_N \ \&\& \ t\_X\_0\_1 = t\_Y\_0\_1 \ \&\&$$

$$t\_X\_1\_j = 0 \ \&\&$$

$$t\_Y\_1\_j = 0 \ \&\&$$

$$t\_X\_1\_i = t\_Y\_1\_i \ \&\& \ t\_X\_1\_k = t\_Y\_1\_k \ \&\& \ t\_X\_1\_N = t\_Y\_1\_N \ \&\& \ t\_X\_1\_1 = t\_Y\_1\_1 \ \&\&$$

$$t\_X\_2\_j = 1 \ \&\&$$

$$t\_Y\_2\_j = 1 \ \&\&$$

$$t\_X\_2\_i = t\_Y\_2\_i \ \&\& \ t\_X\_2\_k = t\_Y\_2\_k \ \&\& \ t\_X\_2\_N = t\_Y\_2\_N \ \&\& \ t\_X\_2\_1 = t\_Y\_2\_1$$

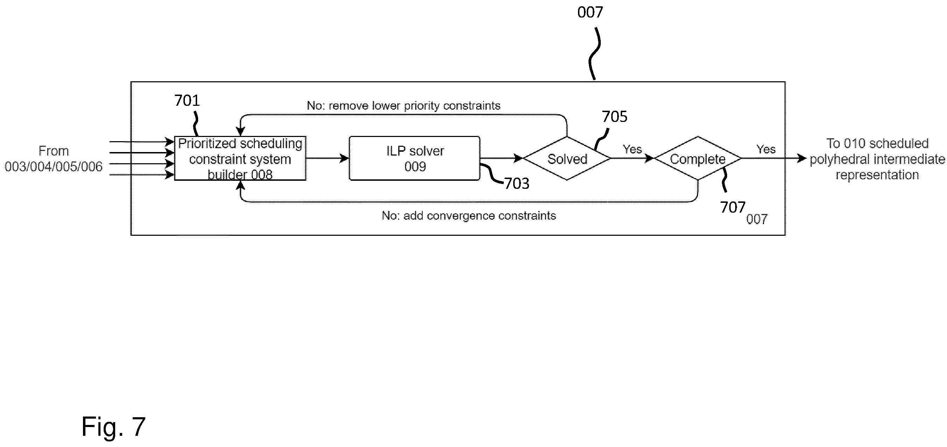

As illustrated in figure 7, in an embodiment, the scheduling entity 007, e.g. the scheduling algorithm 007 is configured to compute all the scheduling coefficients taking into account (1) the adapted polyhedral intermediate representation provided by the data dependence analysis 003, (2) the validity constraints provided by the validity constraint builder 004, (3) the optimization constraints and cost functions provided by the built-in optimization constraints entity 005 and (4) the external constraints provided by the external constraint builder entity 006, considering all of them by means of the prioritized scheduling constraint system builder 008. In an embodiment, the scheduling algorithm implemented by the scheduling entity may be based on the algorithm disclosed in Uday Bondhugula, Albert Hartono, J.

Ramanujam, P. Sadayappan A practical automatic polyhedral parallelizer and locality optimizer PLDI '08: Proceedings of the 29th ACM SIGPLAN Conference on Programming Language Design and Implementation June 2008 Pages 101-113, already mentioned above with specific mechanisms to process the additional constraints. The algorithm iteratively finds scheduling coefficients for each scheduling dimension. At each dimension the prioritized scheduling constraint system builder entity 008 builds a constraint system and calls the integer linear programming solver 009 to find coefficients. For converging towards a solution the scheduling algorithm constraints may be relaxed if they prevent the computation of a solution in the presence of the constraints provided by the external constraint builder 006 as checked by the Solved entity 705. In an embodiment, the constraints provided by the external constraint builder 006 may be relaxed with different priority levels, if they prevent the computation of a solution. Once a scheduling dimension has been computed, the above process will be repeated for a new scheduling dimension until the Complete entity 707 states the scheduling is complete.

For the example described above, the scheduling algorithm implemented by the scheduling entity 007 may compute the following scheduling coefficients with the additional constraints:

$$[N] \to \{$$
$$TX(i,j,k) = (1 * i + 0 * j + 0 * k + 0 * N + 0 * 1,$$
$$0 * i + 0 * j + 1 * k + 0 * N + 0 * 1,$$
$$0 * i + 1 * j + 0 * k + 0 * N + 0 * 1) = (i, k, j);$$
$$TY(i,j,k) = (1 * i + 0 * j + 0 * k + 0 * N + 0 * 1,$$
$$0 * i + 0 * j + 1 * k + 0 * N + 0 * 1,$$
$$0 * i + 0 * j + 0 * k + 0 * N + 0 * 1) = (i, k, j)$$
$$\}$$

As will be appreciated, for this example, dimensions 0 and 2 are analyzed as parallel. An additional internal dimension is added to denote the statement ordering at the innermost level, and the final output 010 may comprises the following information.

Iteration domains (model statement executions):

$$[N] \to \{X(i,j,k) : 0 \geq i < N \text{ and } 0 \geq j < N \text{ and } 0 \geq k < N;$$

$$Y(i,j,k) : 0 \geq i < N \text{ and } 0 \geq j < N \text{ and } 0 \geq k < N\}$$

Access functions (model access to data):

$$[N] \to \{B\_X(i,k) = (i,k);$$

$$A\_X(i,k) = (i,k);$$

$$C\_Y(i,j,k) = (i,j);$$

$$B\_Y(i,j,k) = (i,k);$$

$$D\_Y(i,j,k) = (k,i,j)\}$$

Order functions (model original ordering of statement executions):

$$[N] \to \{X(i,k) = (0,i,k); Y(i,j,k) = (1,i,j,k)\}$$

Scheduling functions and meta information:

$$[N] \to \{TX(i,j,k) = (i,k,j,0); TY(i,j,k) = (i,k,j,1)\}$$

with dimensions 0 and 3 parallel.

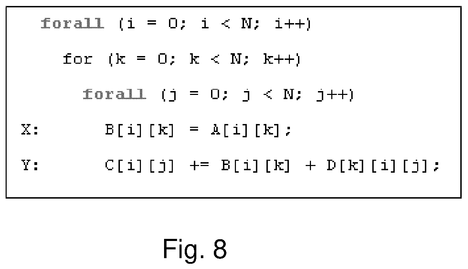

This output using polyhedral abstractions corresponds to the output code illustrated in figure 8. As will be appreciated, in comparison with the output code shown in figure 2 (provided by a conventional polyhedral scheduler), the output code shown in figure 8 (provided by the data processing apparatus 020 according to an embodiment) exhibits a perfectly nested loop and efficient memory access for all data, and hence is more appropriate when targeting, for instance, AI/DL accelerators.

As will be appreciated, embodiments disclosed herein add a new interface for constraint injection to a polyhedral scheduler as well as all the mechanisms to process the injected constraints. As already described above, polyhedral schedulers are modelling computational kernels using linear algebra, manipulate abstractions such as sets, functions and relations with affine constraints, and compute the solution based on an integer linear programming solver. Embodiments disclosed herein use similar abstractions for controlling the computation of a scheduling. Injected constraints may affect different parts of the usual processing flow of a polyhedral scheduler depending on their nature. In an embodiment, the constraint dispatcher 002 parses the input scheduling constraints 001 and determines where to inject each constraint in the processing flow. In an embodiment, the external constraint builder 006 prepares the constraints 001 for their processing within the scheduling algorithm 007. In an embodiment, the data dependence analysis entity 003 is configured to take into account constraints on iteration domains, thereby allowing a safe iteration domain extension to enable optimization by recomputing. In an embodiment, the scheduling algorithm 007 computes the polyhedral scheduling while taking into account new constraints and managing their priorities.

Thus, embodiments disclosed herein enable the fine-grain control of the polyhedral scheduling optimization process. Prior art solutions to control polyhedral scheduling can offer only a limited set of global constraints and optimization objectives (limited because they belong to a pre-defined set, and global because they target all statements and their memory accesses in the same way). In contrast thereto, embodiments disclosed herein allow to input any additional affine constraint. The fine-grain constraint injection makes it possible to address various optimization objectives and to solve performance anomalies for a specific statement or memory access. Moreover, embodiments disclosed herein provide an interface expressive enough to range from complete scheduling specification to slightly influence the optimization process towards the best solution, including the possibility to control the iteration domains and enable optimization by re-computation. Embodiments disclosed herein extend conventional polyhedral scheduling algorithms such that new constraints may be processed with existing ones, finding the best overall optimization without breaking previous scheduling optimizations, and making sure by polyhedral scheduling design that the final scheduling is semantically correct. Embodiments disclosed herein offer a way to improve scheduling without any additional development effort or additional rescheduling pass which complicates the compiler.

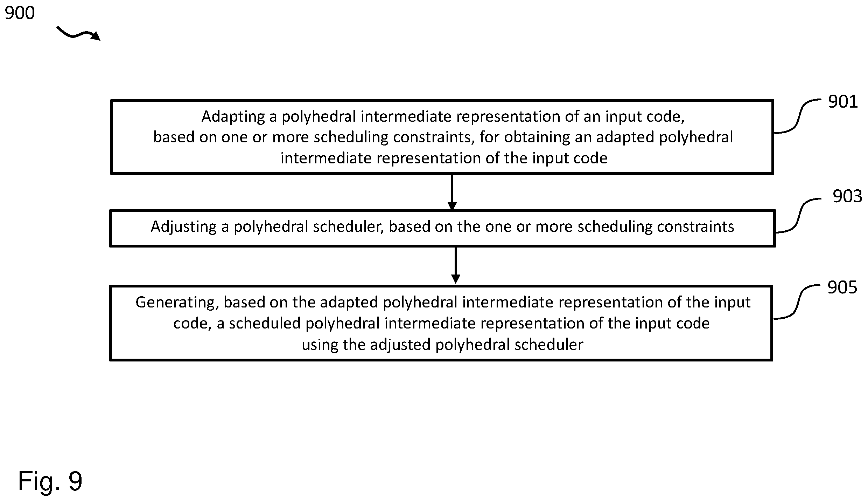

Figure 9 is a flow diagram of a corresponding data processing method 900. In an embodiment, the data processing method 900 may be implemented, i.e. performed by the data processing apparatus 020. The data processing method 900 comprises a first step 901 of adapting a polyhedral intermediate representation 000 of an input code, based on one or more scheduling constraints 001, for obtaining an adapted polyhedral intermediate representation of the input code. The data processing method 900 further comprises a step 903 of adjusting the constraints prioritized polyhedral scheduler 012, based on the one or more scheduling constraints 001. The data processing method 900 comprises a further step 905 of generating, based on the adapted polyhedral intermediate representation of the input code, a scheduled polyhedral intermediate representation 010 of the input code using the adjusted constraints prioritized polyhedral scheduler 012.

In a further possible implementation form of the second aspect, the step of adjusting the constraints prioritized polyhedral scheduler comprises adjusting the constraints prioritized polyhedral scheduler, based on the one or more scheduling constraints and the polyhedral intermediate representation of the input code.

In a further possible implementation form of the second aspect, the method further comprises the step of processing, i.e. compiling the input code into an executable output code based on the scheduled polyhedral intermediate representation of the input code.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

**Claims**

1. A data processing apparatus (020), comprising a processing circuitry (021) comprising a compiler comprising:

   a scheduling constraints injection entity (011) configured to:

   receive scheduling constraints with user-specified priorities (001);
   separate the scheduling constraints with user-specified priorities into domain information constraints and prioritised scheduling constraints;
   adapt the polyhedral intermediate representation (000) of an input code based on the domain information constraints;
   compute data dependence affine sets based on the adapted polyhedral intermediate representation of the input code;
   translate the data dependence affine sets into validity constraints comprising constraints on scheduling coefficients, optimisation constraints comprising affine constraints, and cost functions; and
   translate the prioritised scheduling constraints into external constraints comprising affine constraints on scheduling coefficients;

   and a polyhedral scheduler (012) configured to generate, based on the validity constraints, the optimisation constraints, the cost functions, the external constraints and the adapted polyhedral intermediate representation (010) of the input code, a scheduled polyhedral intermediate representation (010) of the input code; wherein affine constraints on scheduling coefficients obtained from the prioritised scheduling constraints may be relaxed with different priority levels if they prevent the computation of a solution.

2. The data processing apparatus (020) of claim 1, wherein the processing circuitry (021) is further configured to process the input code into an executable output code based on the scheduled polyhedral intermediate representation (010) of the input code.

3. The data processing apparatus (020) of any one of the preceding claims, wherein the data processing apparatus (020) further comprises a communication interface (022) and/or a user interface configured to receive the scheduling constraints with user-specified priorities (001) and to provide the scheduling constraints with user-specified priorities (001) to the scheduling constraints injection entity (011).

4. The data processing apparatus (020) of any one of the preceding claims, wherein the scheduling constraints with user-specified priorities (001) are defined by one or more text files, binary files and/or encoded files.

5. The data processing apparatus (020) of any one of the preceding claims, wherein the scheduling constraints injection entity (011) comprises a constraints dispatcher (002) configured to extract from each of the scheduling constraints with user-specified priorities (001) the domain information constraints and prioritized scheduling constraints.

6. The data processing apparatus of claim 1, wherein the affine constraints on scheduling coefficients comprise priority information.

7. A data processing method (900), performed by:

   a scheduling constraints injection entity (011):

   receiving scheduling constraints with user-specified priorities (001);
   separating the scheduling constraints with user-specified priorities into domain information constraints and prioritised scheduling constraints;
   adapting the polyhedral intermediate representation (000) of an input code based on the domain information constraints;

computing data dependence affine sets based on the adapted polyhedral intermediate representation of the input code;

translating the data dependence affine sets into validity constraints comprising constraints on scheduling coefficients, optimisation constraints comprising affine constraints, and cost functions; and

translating the prioritised scheduling constraints into external constraints comprising affine constraints on scheduling coefficients;

and

a polyhedral scheduler (012) generating, based on the validity constraints, the optimisation constraints, the cost functions, the external constraints and the adapted polyhedral intermediate representation (010) of the input code, a scheduled polyhedral intermediate representation (010) of the input code; wherein affine constraints on scheduling coefficients obtained from the prioritised scheduling constraints may be relaxed with different priority levels if they prevent the computation of a solution.

8. A computer program product comprising a computer-readable storage medium for storing program code which causes a computer or a processor to perform the method (900) of claim 7 when the program code is executed by the computer or the processor.

**Patentansprüche**

1. Datenverarbeitungsvorrichtung (020), umfassend einen Verarbeitungsschaltkreis (021), umfassend einen Compiler, umfassend:

   eine Scheduling-Einschränkungsinjektionseinheit (011), die zu Folgendem konfiguriert ist:

   Empfangen von Scheduling-Einschränkungen benutzerdefinierten Prioritäten (001);
   Trennen der Scheduling-Einschränkungen mit benutzerdefinierten Prioritäten in Domäneninformationseinschränkungen und priorisierte Scheduling-Einschränkungen;
   Anpassen der polyedrischen Zwischenproduktdarstellung (000) eines Eingabecodes basierend auf den Domäneninformationseinschränkungen;
   Berechnen von datenabhängigkeitsaffinen Sätze basierend auf der angepassten polyedrischen Zwischenproduktdarstellung des Eingabecodes;
   Übersetzen der datenabhängigkeitsaffinen Sätze in Gültigkeitseinschränkungen, umfassend Einschränkungen für Scheduling-Koeffizienten, Optimierungseinschränkungen, umfassend affine Einschränkungen, und Kostenfunktionen; und
   Übersetzen der priorisierten Scheduling-Einschränkungen in externe Einschränkungen, umfassend affine Einschränkungen für Scheduling-Koeffizienten;
   und einen polyedrischen Scheduler (012), der dazu konfiguriert ist, basierend auf den Gültigkeitseinschränkungen, den Optimierungseinschränkungen, den Kostenfunktionen, den externen Einschränkungen und der angepassten polyedrischen Zwischendarstellung (010) des Eingabecodes eine geplante polyedrische Zwischendarstellung (010) des Eingabecodes zu erzeugen; wobei affine Einschränkungen auf Scheduling-Koeffizienten, die aus den priorisierten Scheduling-Einschränkungen erlangt werden, mit unterschiedlichen Prioritätsstufen gelockert werden können, wenn sie die Berechnung einer Lösung verhindern.

2. Datenverarbeitungsvorrichtung (020) nach Anspruch 1, wobei der Verarbeitungsschaltkreis (021) ferner dazu konfiguriert ist, den Eingabecode in einen ausführbaren Ausgabecode basierend auf der geplanten polyedrischen Zwischendarstellung (010) des Eingabecodes zu verarbeiten.

3. Datenverarbeitungsvorrichtung (020) nach einem der vorhergehenden Ansprüche, wobei die Datenverarbeitungsvorrichtung (020) ferner eine Kommunikationsschnittstelle (022) und/oder eine Benutzerschnittstelle umfasst, die dazu konfiguriert ist, die Scheduling-Einschränkungen mit benutzerdefinierten Prioritäten (001) zu empfangen und die Scheduling-Einschränkungen mit benutzerdefinierten Prioritäten (001) der Scheduling-Einschränkungsinjektionseinheit (011) bereitzustellen.

4. Datenverarbeitungsvorrichtung (020) nach einem der vorhergehenden Ansprüche, wobei die Scheduling-Einschränkungen mit benutzerdefinierten Prioritäten (001) durch eine oder mehrere Textdateien, Binärdateien und/oder codierte Dateien definiert sind.

**5.** Datenverarbeitungsvorrichtung (020) nach einem der vorhergehenden Ansprüche, wobei die Scheduling-Einschränkungsinjektionseinheit (011) einen Einschränkungs-Dispatcher (002) umfasst, der dazu konfiguriert ist, aus jeder der Scheduling-Einschränkungen mit benutzerdefinierten Prioritäten (001) die Domäneninformationseinschränkungen und priorisierten Scheduling-Einschränkungen zu extrahieren.

**6.** Datenverarbeitungsvorrichtung nach Anspruch 1, wobei die affinen Einschränkungen für Scheduling-Koeffizienten Prioritätsinformationen umfassen.

**7.** Datenverarbeitungsverfahren (900), durchgeführt durch:
eine Scheduling-Einschränkungsinjektionseinheit (011):

Empfangen von Scheduling-Einschränkungen mit benutzerdefinierten Prioritäten (001);
Trennen der Scheduling-Einschränkungen mit benutzerdefinierten Prioritäten in Domäneninformationseinschränkungen und priorisierte Scheduling-Einschränkungen;
Anpassen der polyedrischen Zwischenproduktdarstellung (000) eines Eingabecodes basierend auf den Domäneninformationseinschränkungen;
Berechnen von datenabhängigkeitsaffinen Sätzen basierend auf der angepassten polyedrischen Zwischenproduktdarstellung des Eingabecodes;
Übersetzen der datenabhängigkeitsaffinen Sätze in Gültigkeitseinschränkungen, umfassend Einschränkungen für Scheduling-Koeffizienten, Optimierungseinschränkungen, umfassend affine Einschränkungen, und Kostenfunktionen; und
Übersetzen der priorisierten Scheduling-Einschränkungen in externe Einschränkungen, umfassend affine Einschränkungen für Scheduling-Koeffizienten;
und
einen polyedrischen Scheduler (012), der basierend auf den Gültigkeitseinschränkungen, den Optimierungseinschränkungen, den Kostenfunktionen, den externen Einschränkungen und der angepassten polyedrischen Zwischendarstellung (010) des Eingabecodes eine geplante polyedrische Zwischendarstellung (010) des Eingabecodes erzeugt; wobei affine Einschränkungen auf Scheduling-Koeffizienten, die aus den priorisierten Scheduling-Einschränkungen erlangt werden, mit unterschiedlichen Prioritätsstufen gelockert werden können, wenn sie die Berechnung einer Lösung verhindern.

**8.** Computerprogrammprodukt, umfassend ein computerlesbares Speichermedium zum Speichern von Programmcode, der einen Computer oder einen Prozessor veranlasst, das Verfahren (900) nach Anspruch 7 durchzuführen, wenn der Programmcode durch den Computer oder den Prozessor ausgeführt wird.

**Revendications**

**1.** Appareil de traitement de données (020), comprenant un circuit de traitement (021) comprenant un compilateur comprenant :
une entité d'injection de contraintes d'ordonnancement (011) configurée pour :

recevoir des contraintes d'ordonnancement avec des priorités spécifiées par l'utilisateur (001) ;
séparer les contraintes d'ordonnancement avec des priorités spécifiées par l'utilisateur en contraintes d'informations de domaine et contraintes d'ordonnancement prioritaires ;
adapter la représentation intermédiaire polyédrique (000) d'un code d'entrée sur la base des contraintes d'information du domaine ;
calculer des ensembles affines de dépendance des données sur la base de la représentation intermédiaire polyédrique adaptée du code d'entrée ;
traduire les ensembles affines de dépendance des données en contraintes de validité comprenant des contraintes sur les coefficients d'ordonnancement, des contraintes d'optimisation comprenant des contraintes affines, et des fonctions de coût ; et
traduire les contraintes d'ordonnancement prioritaires en contraintes externes comprenant des contraintes affines sur les coefficients d'ordonnancement ;
et un ordonnanceur polyédrique (012) configuré pour générer, sur la base des contraintes de validité, des contraintes d'optimisation, des fonctions de coût, des contraintes externes et de la représentation intermédiaire polyédrique (010) adaptée du code d'entrée, une représentation intermédiaire polyédrique ordonnancée (010) du code d'entrée ; dans lequel des contraintes affines sur des coefficients d'ordonnancement obtenus à partir des contraintes d'ordonnancement priorisées peuvent être assouplies avec différents niveaux de priorité si elles empêchent le calcul d'une solution.

2. Appareil de traitement de données (020) selon la revendication 1, dans lequel le circuit de traitement (021) est également configuré pour traiter le code d'entrée en un code de sortie exécutable sur la base de la représentation intermédiaire polyédrique ordonnancée (010) du code d'entrée.

3. Appareil de traitement de données (020) selon l'une quelconque des revendications précédentes, dans lequel l'appareil de traitement de données (020) comprend également une interface de communication (022) et/ou une interface utilisateur configurée pour recevoir les contraintes d'ordonnancement avec des priorités spécifiées par l'utilisateur (001) et pour fournir les contraintes d'ordonnancement avec des priorités spécifiées par l'utilisateur (001) à l'entité d'injection de contraintes d'ordonnancement (011).

4. Appareil de traitement de données (020) selon l'une quelconque des revendications précédentes, dans lequel les contraintes d'ordonnancement avec des priorités spécifiées par l'utilisateur (001) sont définies par un ou plusieurs fichiers texte, fichiers binaires et/ou fichiers codés.

5. Appareil de traitement de données (020) selon l'une quelconque des revendications précédentes, dans lequel l'entité d'injection de contraintes d'ordonnancement (011) comprend un répartiteur de contraintes (002) configuré pour extraire de chacune des contraintes d'ordonnancement avec des priorités spécifiées par l'utilisateur (001) les contraintes d'informations de domaine et les contraintes d'ordonnancement prioritaires.

6. Appareil de traitement de données selon la revendication 1, dans lequel les contraintes affines sur les coefficients d'ordonnancement comprennent des informations de priorité.

7. Procédé de traitement de données (900), réalisé par :
une entité d'injection de contraintes d'ordonnancement (011) :

la réception de contraintes d'ordonnancement avec des priorités spécifiées par l'utilisateur (001) ;
la séparation des contraintes d'ordonnancement avec des priorités spécifiées par l'utilisateur en contraintes d'informations de domaine et contraintes d'ordonnancement prioritaires ;
l'adaptation de la représentation intermédiaire polyédrique (000) d'un code d'entrée sur la base des contraintes d'information de domaine ;
le calcul d'ensembles affines de dépendance des données sur la base de la représentation intermédiaire polyédrique adaptée du code d'entrée ;
la traduction des ensembles affines de dépendance des données en contraintes de validité comprenant des contraintes sur les coefficients d'ordonnancement, des contraintes d'optimisation comprenant des contraintes affines et des fonctions de coût ; et
la traduction des contraintes d'ordonnancement prioritaires en contraintes externes comprenant des contraintes affines sur des coefficients d'ordonnancement ;
et
un ordonnanceur polyédrique (012) générant, sur la base des contraintes de validité, des contraintes d'optimisation, des fonctions de coût, des contraintes externes et de la représentation intermédiaire polyédrique (010) adaptée du code d'entrée, une représentation intermédiaire polyédrique ordonnancée (010) du code d'entrée ;
dans lequel des contraintes affines sur des coefficients d'ordonnancement obtenus à partir des contraintes d'ordonnancement priorisées peuvent être assouplies avec différents niveaux de priorité si elles empêchent le calcul d'une solution.

8. Produit de programme informatique comprenant un support de stockage lisible par ordinateur destiné à stocker un code de programme qui amène un ordinateur ou un processeur à réaliser le procédé (900) selon la revendication 7 lorsque le code de programme est exécuté par l'ordinateur ou le processeur.

```
for (i = 0; i < N; i++)
    for (k = 0; k < N; k++)
X:      B[i][k] = A[i][k];
    for (i = 0; i < N; i++)
        for (j = 0; j < N; j++)
            for (k = 0; k < N; k++)
Y:              C[i][j] += B[i][k] + D[k][i][j];
```

Fig. 1

```
forall (i = 0; i < N; i++)
    forall (k = 0; k < N; k++)
X:      B[i][k] = A[i][k];
    forall (i = 0; i < N; i++)
        forall (j = 0; j < N; j++)
            for (k = 0; k < N; k++)
Y:              C[i][j] += B[i][k] + D[k][i][j];
```

Fig. 2

000

**Poly IR**

312 — Polyhedral Scheduler

313 — Re-scheduling
passes of manual scheduling constraints

314 — Other optimization
passes

010' — **Poly IR**

# Fig. 3a

Fig. 3b

EP 4 302 180 B1

Fig. 4

EP 4 302 180 B1

From 001 the scheduling constraints

501

Parse

503

Dispatch

002

002

To 003 the domain information portion

To 006 the prioritized scheduling information portion

Fig. 5

EP 4 302 180 B1

Fig. 6

Fig. 7

```
forall (i = O; i < N; i++)

    for (k = O; k < N; k++)

      forall (j = O; j < N; j++)

X:      B[i][k] = A[i][k];

Y:      C[i][j] += B[i][k] + D[k][i][j];
```

Fig. 8

900

Adapting a polyhedral intermediate representation of an input code,
based on one or more scheduling constraints, for obtaining an adapted polyhedral
intermediate representation of the input code — 901

Adjusting a polyhedral scheduler, based on the one or more scheduling constraints — 903

Generating, based on the adapted polyhedral intermediate representation of the input
code, a scheduled polyhedral intermediate representation of the input code
using the adjusted polyhedral scheduler — 905

Fig. 9

**EP 4 302 180 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Tiramisu: a polyhedral compiler for expressing fast and portable code. **RIYADH BAGHDADI et al.** CODE GENERATION AND OPTIMIZATION. IEEE PRESS, 16 February 2019, 193-205
- Tensor Comprehensions: Framework-Agnostic High-Performance Machine Learning Abstractions. **NICOLAS VASILACHE et al.** ARXIV.ORG. CORNELL UNIVERSITY LIBRARY, 13 February 2018, 1-36
- Automatic Generation of Multi-Objective Polyhedral Compiler Transformations. **CHELINI LORENZO L CHELINI@TUE NL et al.** EXTENDED ABSTRACTS OF THE 2021 CHI CONFERENCE ON HUMAN FACTORS IN COMPUTING SYSTEMS. ACMPUB, 30 September 2020, 83-96
- Adaptive Code Refinement: A Compiler Technique and Extensions to Generate Self-Tuning Applications. **SCHMITT MAXIME et al.** 2017 IEEE 24TH INTERNATIONAL CONFERENCE ON HIGH PERFORMANCE COMPUTING (HIPC). IEEE, 18 December 2017, 172-181
- **FEAUTRIER, P.** Some efficient solutions to the affine scheduling problem. I. One-dimensional time. *Int J Parallel Prog*, 1992, vol. 21, 313-347
- **UDAY BONDHUGULA** ; **ALBERT HARTONO** ; **J. RAMANUJAM** ; **P. SADAYAPPAN**. *A practical automatic polyhedral parallelizer and locality optimizer PLDI '08: Proceedings of the 29th ACM SIGPLAN Conference on Programming Language Design and Implementation*, June 2008, 101-113